# EUROPÄISCHE PATENTANMELDUNG

(11) **EP 4 763 668 A1**
(43) Veröffentlichungstag der Anmeldung: **24.06.2026**
(21) Anmeldenummer: 25222213.8
(22) Anmeldetag: 10.12.2025
(51) Int. Cl.: B62D 1/20, B62D 5/04

(54) **WELLENHALTESCHRAUBE FÜR NUTZFAHRZEUGE**

(30) Priorität: 18.12.2024 US 202418985074
(71) Anmelder: ZF Active Safety and Electronics US LLC, Livonia MI 48150 (US)
(72) Erfinder: KINTNER, Jason, West Lafayette, 47906 (US); ERICKSON, Kullin, Lafayette, 47905 (US); CLENDENNING, Mari, Lafayette, 47909 (US)
(74) Vertreter: ZF Friedrichshafen AG

(57) **Zusammenfassung**

Ein Lenkunterstützungssystem für ein Nutzfahrzeug enthält eine Eingangswelle, eine Ausgangswelle, einen Ausgangswellenadapter, eine Tragplatte, ein Schneckenrad und eine Wellenhalteschraube. Die Eingangswelle definiert eine Eingangsachse und einen ersten hohlen Abschnitt. Die Ausgangswelle definiert eine Ausgangsachse und einen zweiten hohlen Abschnitt, wobei die Ausgangswelle innerhalb des ersten hohlen Abschnitts koaxial zur Eingangswelle angeordnet ist. Der Ausgangswellenadapter definiert einen dritten hohlen Abschnitt, der sich axial durch den Ausgangswellenadapter erstreckt. Die Wellenhalteschraube weist einen Körperabschnitt, der Außengewinde definiert, auf, wobei die Wellenhalteschraube im dritten hohlen Abschnitt angeordnet ist. Der Körperabschnitt erstreckt sich in den zweiten hohlen Abschnitt, so dass die Außengewinde in die Innengewinde des zweiten hohlen Abschnitts eingreifen, um eine axiale Trennung zwischen der Ausgangswelle und dem Ausgangswellenadapter zu verhindern.

## Beschreibung

### GEBIET

Die vorliegende Offenbarung betrifft eine Wellenhalteschraube für ein Lenkunterstützungssystem für Nutzfahrzeuge.

### HINTERGRUND

Die Lenkbaugruppen von Nutzfahrzeugen sind während des normalen Betriebs durch große Schwingungsbeträge beeinflussbar und können es erfordern, dass durch den Fahrer auf unebenen Oberflächen oder bei windigen Bedingungen größere Kraftbeträge über das Lenkrad ausgeübt werden. Wenn ein Nutzfahrzeug auf der Straße fährt, können die Radbaugruppen des Nutzfahrzeugs Schwingungen erzeugen oder ein Drehmoment ausüben, das von den Rädern des Fahrzeugs über die Ausgangswelle, die Lenksäule, die Eingangswelle und die Lenkradbaugruppe auf das Lenkrad übertragen wird. Herkömmliche Nutzfahrzeuge können außerdem schwere Drehmomentüberlagerungssysteme aufweisen, die an den Lenksäulen installiert sind, die die in der Lenksäule erzeugten Schwingungen verstärken. Die Schwingungen der Lenksäule und das zusätzliche Drehmoment, das dem Lenken eines Nutzfahrzeugs inhärent ist, sind unerwünscht und können zu einer verringerten Lenkleistung des Nutzfahrzeugs führen.

### ZUSAMMENFASSUNG

Die Ausführungsformen der vorliegenden Offenbarung stellen gemäß einem ersten Aspekt ein Lenkunterstützungssystem für ein Nutzfahrzeug bereit, wobei das Lenkunterstützungssystem Folgendes umfasst: eine Eingangswelle, die eine Eingangsachse und einen ersten hohlen Abschnitt definiert, wobei die Eingangswelle konfiguriert ist, in eine Lenksäule des Nutzfahrzeugs einzugreifen; eine Ausgangswelle, die eine Ausgangsachse und einen zweiten hohlen Abschnitt definiert, wobei die Ausgangswelle innerhalb des ersten hohlen Abschnitts koaxial zur Eingangswelle angeordnet ist und der zweite hohle Abschnitt Innengewinde definiert; einen Ausgangswellenadapter, der einen dritten hohlen Abschnitt definiert, der sich axial durch den Ausgangswellenadapter erstreckt, wobei der dritte hohle Abschnitt einen Bereich mit kleinerem Durchmesser an einem ersten Ende und einen Bereich mit größerem Durchmesser neben dem Bereich mit kleinerem Durchmesser aufweist, wobei eine Schulter an einem Übergang zwischen dem Bereich mit kleinerem Durchmesser und dem Bereich mit größerem Durchmesser definiert ist, wobei der Ausgangswellenadapter an dem ersten Ende der Ausgangswelle angeordnet ist, so dass der Bereich mit kleinerem Durchmesser die Ausgangswelle in Umfangsrichtung umgibt; eine Tragplatte, die ein Lager enthält, das konfiguriert ist, den Ausgangswellenadapter aufzunehmen und die Drehung des Ausgangswellenadapters zu führen; ein Schneckenrad, das den Ausgangswellenadapter in Umfangsrichtung umgibt, wobei das Schneckenrad einen äußeren Umfang aufweist, der konfiguriert ist, in eine Schneckenwelle zur Lenkunterstützung einzugreifen; und eine Wellenhalteschraube mit einem Kopfabschnitt, der einen Flansch definiert, und einem Körperabschnitt, der Außengewinde definiert, wobei die Wellenhalteschraube in dem dritten hohlen Abschnitt angeordnet ist, so dass der Flansch in die Schulter eingreift und sich der Körperabschnitt in den zweiten hohlen Abschnitt erstreckt, so dass die Außengewinde in die Innengewinde der Ausgangswelle eingreifen, um eine axiale Trennung zwischen der Ausgangswelle und dem Ausgangswellenadapter zu verhindern.

Gemäß einer Implementierung des ersten Aspekts kann das Lenkunterstützungssystem ferner eine Sensorbaugruppe umfassen, die die Eingangswelle und die Ausgangswelle in Umfangsrichtung umgibt, wobei die Sensorbaugruppe konfiguriert ist, einen Winkelunterschied zwischen der Eingangswelle und der Ausgangswelle zu messen.

Gemäß einer Implementierung des ersten Aspekts kann der Ausgangswellenadapter ferner Keilnuten zum Eingreifen in eine Welle einer hydraulischen Lenkgetriebebaugruppe des Nutzfahrzeugs umfassen.

Gemäß einer Implementierung des ersten Aspekts kann das Lenkunterstützungssystem ferner einen Torsionsstab umfassen, der koaxial innerhalb des ersten und des zweiten hohlen Abschnitts angeordnet ist.

Gemäß einer Implementierung des ersten Aspekts kann die Wellenhalteschraube ferner eine Sechskantschraube mit Innengewinde zum Drehen der Wellenhalteschraube enthalten, so dass die Außengewinde in die Innengewinde eingreifen.

Gemäß einer Implementierung des ersten Aspekts kann der Flansch einen Durchmesser aufweisen, der größer als der Bereich mit dem kleineren Durchmesser ist.

Gemäß einer Implementierung des ersten Aspekts kann das Lenkunterstützungssystem ferner ein Gehäuse umfassen, das konfiguriert ist, die Tragplatte aufzunehmen, wobei das Gehäuse und die Tragplatte konfiguriert sind, eine Bewegung der Eingangswelle, der Ausgangswelle und des Ausgangswellenadapters in einer radialen Richtung zu verhindern.

Gemäß einer Implementierung des ersten Aspekts kann die Ausgangswelle in den Ausgangswellenadapter eingepresst sein.

Gemäß einer Implementierung des ersten Aspekts kann der Ausgangswellenadapter konfiguriert sein, in eine Eingangswelle des hydraulischen Lenkgetriebes des Nutzfahrzeugs einzugreifen.

### KURZBESCHREIBUNG DER ZEICHNUNGEN

Die Ausführungsformen der vorliegenden Offenbarung werden im Folgenden basierend auf den beispielhaften Figuren ausführlicher beschrieben. Die vorliegende Offenbarung ist nicht auf die beispielhaften Ausführungsformen eingeschränkt. Alle hier beschriebenen und/oder veranschaulichten Merkmale können allein oder in verschiedenen Kombinationen gemäß den Ausführungsformen der vorliegenden Offenbarung kombiniert verwendet werden. Die Merkmale und Vorteile verschiedener Ausführungsformen der vorliegenden Offenbarung werden durch das Lesen der folgenden ausführlichen Beschreibung bezüglich der beigefügten Zeichnungen ersichtlich, die das Folgende veranschaulichen:
Fig. 1 veranschaulicht eine Seitenansicht im Querschnitt eines Lenkunterstützungssystems mit einer Wellenhalteschraube gemäß einem oder mehreren Beispielen der vorliegenden Offenbarung;
Fig. 2 veranschaulicht eine perspektivische Ansicht eines Lenkunterstützungssystems mit einer Abdeckungshalterung und einem Hauptgehäuse eines ReAX-Moduls mit einem befestigten elektronischen Netzteil gemäß einem oder mehreren Beispielen der vorliegenden Offenbarung;
Fig. 3 veranschaulicht eine perspektivische Ansicht eines Lenkunterstützungssystems, das eine Eingangs-Ausgangs-Baugruppe, eine Sensor-Unterbaugruppe, ein Schneckenrad, einen Ausgangswellenadapter und eine Wellenhalteschraube enthält, gemäß einem oder mehreren Beispielen der vorliegenden Offenbarung;
Fig. 4 veranschaulicht eine perspektivische Ansicht eines ReAX-Moduls, das mit dem Lenkunterstützungssystem und einer hydraulischen Lenkgetriebebaugruppe zusammengebaut ist, gemäß einem oder mehreren Beispielen der vorliegenden Offenbarung; und
Fig. 5 veranschaulicht eine perspektivische Ansicht einer ReAX-Getriebesystembaugruppe.

### AUSFÜHRLICHE BESCHREIBUNG

Im Folgenden werden Beispiele der vorgestellten Anmeldung bezüglich der beigefügten Figuren vollständiger beschrieben, in denen einige, aber nicht alle Beispiele der Anmeldung gezeigt sind. Die Anmeldung kann in verschiedenen Formen veranschaulicht werden und sollte nicht als auf die hier dargelegten Beispiele eingeschränkt ausgelegt werden; vielmehr werden diese Beispiele bereitgestellt, so dass die Anmeldung die geltenden gesetzlichen Anforderungen erfüllt. Wo es möglich ist, sind alle hier in der Einzahlform ausgedrückten Begriffe so gemeint, dass sie außerdem die Mehrzahlform enthalten und umgekehrt, wenn es nicht ausdrücklich anders angegeben ist. Der Begriff "einer" und/oder "eine", wie sie hier verwendet werden, sollen "einer oder mehrere" bedeuten, obwohl der Ausdruck "einer oder mehrere" hier außerdem verwendet wird. Weiterhin, wenn hier gesagt wird, dass etwas "auf" etwas anderem "basiert", kann es ebenfalls auf einem oder mehreren anderen Dingen basieren. Mit anderen Worten, wenn es nicht ausdrücklich anders angegeben, bedeutet "basierend auf", wie es hier verwendet wird, "wenigstens zum Teil basierend auf" oder "wenigstens teilweise basierend auf".

Die Lenkbaugruppen von Nutzfahrzeugen sind während des normalen Betriebs durch große Schwingungsbeträge beeinflussbar und können es erfordern, dass durch den Fahrer auf unebenen Oberflächen, bei geringen Geschwindigkeiten oder bei windigen Bedingungen größere Kraftbeträge über das Lenkrad ausgeübt werden. Wenn ein Nutzfahrzeug auf der Straße fährt, können die Radbaugruppen des Nutzfahrzeugs Schwingungen erzeugen oder ein Drehmoment ausüben, das von den Rädern des RV über die Ausgangswelle, die Lenksäule, die Eingangswelle und die Lenkradbaugruppe auf das Lenkrad übertragen wird. Herkömmliche Nutzfahrzeuge können außerdem schwere Drehmomentüberlagerungssysteme aufweisen, die an den Lenksäulen installiert sind, die die in der Lenksäule erzeugten Schwingungen verstärken. Die Schwingungen der Lenksäule und das zusätzliche Drehmoment, das dem Lenken eines Nutzfahrzeugs inhärent ist, sind unerwünscht und können zu einer verringerten Lenkleistung des Nutzfahrzeugs führen.

Die vorliegende Offenbarung beschreibt die Verwendung einer Wellenhalteschraube, um bestehende Eingangs-Ausgangs-Baugruppen von Lenksäulen oder Lenkunterstützungssystemen zu tragen, um eine unerwünschte relative axiale Bewegung zwischen einer Ausgangswelle und einem Wellenadapter in bestehenden Lenkunterstützungssystemen oder Lenksäulen zu verhindern. Durch das Installieren einer Wellenhalteschraube in den bestehenden Eingangs-Ausgangs-Baugruppen von Lenksäulen oder Lenkunterstützungssystemen können die bestehenden Lenksäulen oder Lenkunterstützungssysteme langlebiger gemacht werden und eine überlegene Leistung und Zuverlässigkeit bei den Operationen eines Nutzfahrzeugs bereitstellen. Es ist insofern ein Vorteil der Wellenhalteschraube der vorliegenden Offenbarung, als die Wellenhalteschraube in die bestehende Bauform des Lenksystems eines Nutzfahrzeugs implementiert werden kann, wodurch die Notwendigkeit umgangen wird, das Lenksystem neu zu entwerfen.

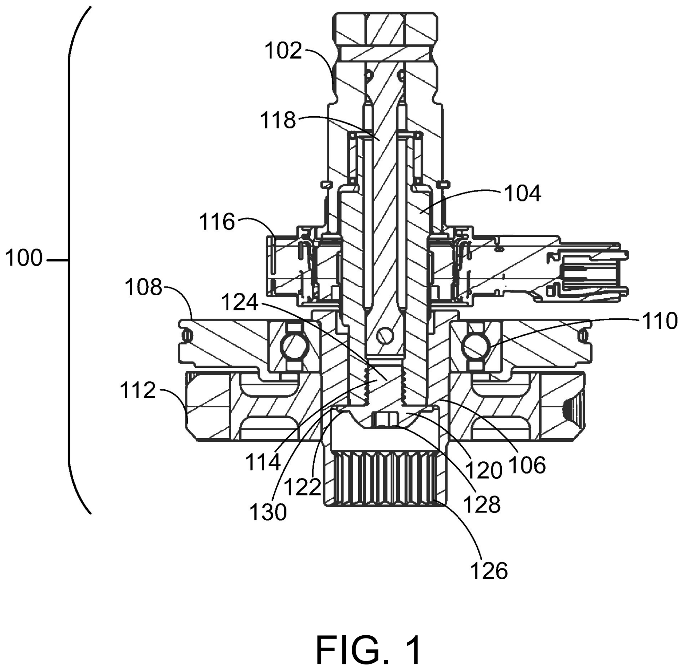

Fig. 1 veranschaulicht eine Seitenansicht im Querschnitt eines Lenkunterstützungssystems mit einer Wellenhalteschraube gemäß einem oder mehreren Beispielen der vorliegenden Offenbarung. Fig. 1 veranschaulicht eine Seitenansicht im Querschnitt des Lenkunterstützungssystems 100. Das Lenkunterstützungssystem 100 enthält eine Eingangswelle 102, eine Ausgangswelle 104, einen Ausgangswellenadapter 106, eine Tragplatte 108, die ein Lager 110 enthält, ein Schneckenrad 112, eine Wellenhalteschraube 114, einen oder mehrere Sensoren, eine Sensorbaugruppe oder eine Sensoranordnung 116 und einen Torsionsstab 118. Gemäß den Ausführungsformen kann die Eingangswelle eine Eingangsachse und einen ersten hohlen Abschnitt definieren. Die Eingangswelle 102 kann konfiguriert sein, in eine Lenksäule eines Nutzfahrzeugs einzugreifen. Gemäß den Ausführungsformen definiert die Ausgangswelle 104 eine Ausgangsachse und einen zweiten hohlen Abschnitt. Die Ausgangswelle 104 ist innerhalb des ersten hohlen Abschnitts koaxial zur Eingangswelle 102 angeordnet. Gemäß den Ausführungsformen definiert der zweite hohle Abschnitt der Ausgangswelle 104 Innengewinde. Gemäß den Ausführungsformen definiert der Ausgangswellenadapter 106 einen dritten hohlen Abschnitt, der sich axial durch den Ausgangswellenadapter erstreckt. Der dritte hohle Abschnitt kann einen Bereich mit kleinerem Durchmesser an einem ersten Ende und einen Bereich mit größerem Durchmesser neben dem Bereich mit kleinerem Durchmesser aufweisen, wobei eine Schulter 130 an einem Übergang zwischen dem Bereich mit kleinerem Durchmesser und dem Bereich mit größerem Durchmesser definiert ist.

Gemäß den Ausführungsformen ist der Ausgangswellenadapter 106 am ersten Ende der Ausgangswelle 104 angeordnet, so dass der Bereich mit kleinerem Durchmesser die Ausgangswelle 104 in Umfangsrichtung umgibt. Gemäß den Ausführungsformen enthält die Tragplatte 108 das Lager 110, wobei das Lager 110 konfiguriert ist, den Ausgangswellenadapter 106 aufzunehmen und die Drehung des Ausgangswellenadapters 106 zu führen. Gemäß den Ausführungsformen umgibt das Schneckenrad 112 den Ausgangswellenadapter 106 in Umfangsrichtung, wobei es konfiguriert ist, in eine Schneckenwelle zur Lenkunterstützung eines Nutzfahrzeugs einzugreifen.

Gemäß den Ausführungsformen weist die Wellenhalteschraube 114 einen Kopfabschnitt 120, der einen Flansch 122 definiert, und einen Körperabschnitt 124, der Außengewinde definiert, auf. Die Wellenhalteschraube 114 ist in dem dritten hohlen Abschnitt des Ausgangswellenadapters 106 angeordnet, so dass sich der Flansch 122 mit der Schulter 130 in Kontakt befindet und sich der Körperabschnitt 124 in den zweiten hohlen Abschnitt der Ausgangswelle 104 erstreckt, so dass die Außengewinde des Körperabschnitts 124 in die Innengewinde der Ausgangswelle 104 eingreifen, um eine axiale Trennung zwischen der Ausgangswelle 104 und dem Ausgangswellenadapter 106 zu verhindern.

Gemäß den Ausführungsformen enthält der Ausgangswellenadapter Keilnuten 126 zum Eingreifen in ein hydraulisches Lenkgetriebe eines Nutzfahrzeugs. Gemäß den Ausführungsformen ist der Ausgangswellenadapter 106 konfiguriert, in eine Eingangswelle eines hydraulischen Lenkgetriebes eines Nutzfahrzeugs einzugreifen. Gemäß den Ausführungsformen ist der Torsionsstab 118 koaxial innerhalb des ersten und zweiten hohlen Abschnitts der Eingangswelle 102 bzw. der Ausgangswelle 104 angeordnet. Gemäß den Ausführungsformen umgibt der Sensor oder die Sensorbaugruppe 116 die Eingangswelle 102 und die Ausgangswelle 104 in Umfangsrichtung. Der Sensor oder die Sensorbaugruppe 116 ist konfiguriert, einen Winkelunterschied zwischen der Eingangswelle 102 und der Ausgangswelle 104 zu messen. Die durch den Sensor oder die Sensorbaugruppe 116 erhaltenen Messwerte oder Messungen werden zu einer elektronischen Steuereinheit (ECU) des Lenkunterstützungssystems elektronisch übermittelt oder übertragen, um eine Drehmomentunterstützung zu erzeugen, um einen Fahrer während des Betriebs des Nutzfahrzeugs zu unterstützen.

Gemäß den Ausführungsformen enthält die Wellenhalteschraube 114 eine Sechskantschraube 128 mit Innengewinde, die verwendet wird, um die Wellenhalteschraube 114 anzuziehen oder zu drehen, so dass die Außengewinde des Körperabschnitts 124 in die Innengewinde der Ausgangswelle 104 eingreifen. Gemäß einigen Ausführungsformen weist der Flansch 122 einen Durchmesser auf, der dem Bereich mit größerem Durchmesser des Ausgangswellenadapters 106 entspricht (der Flansch 122 weist z. B. einen Durchmesser auf, der größer als der Bereich mit kleinerem Durchmesser ist). Gemäß den Ausführungsformen sind die Ausgangswelle 104 und der Ausgangswellenadapter 106 ineinander eingepresst, um eine erste Eingriffskraft zwischen der Ausgangswelle 104 und dem Ausgangswellenadapter 106 zu bilden. Die Ausgangswelle 104 weist z. B. einen Außendurchmesser auf, der größer als der Innendurchmesser des Ausgangswellenadapters 106 ist. Es wird eine Kraft ausgeübt, um die Ausgangswelle 104 in den Ausgangswellenadapter 106 einzupressen, wobei die Ausgangswelle 104 geringfügig zusammengedrückt wird, während sich der Ausgangswellenadapter 106 geringfügig ausdehnt, um die Passung zwischen den beiden Objekten 104 und 106 zu ermöglichen. Das Einpressen der Ausgangswelle 104 und des Ausgangswellenadapters 106 führt zu einer Kraft, die aufeinander ausgeübt wird, um die Ausgangswelle 104 und den Ausgangswellenadapter 106 zusammenzuhalten. Eine zweite Eingriffskraft zwischen der Ausgangswelle 104 und dem Wellenadapter 106 ergibt sich aus der Wellenhalteschraube 114, da die Außengewinde des Körperabschnittes 124 der Wellenhalteschraube 114 in die Innengewinde der Ausgangswelle 104 eingreifen.

Gemäß den Ausführungsformen arbeiten sowohl die Eingangswelle 102, die Ausgangswelle 104, der Torsionsstab 118 und der Ausgangswellenadapter 106 als auch die anderen in Fig. 1 dargestellten Komponenten (108-128) zusammen, um das Lenken durch das Hinzufügen einer Leistungsunterstützung zu einer Lenkkraft des Fahrers für das Nutzfahrzeug leichter zu machen. Die Eingangswelle 102 ist z. B. mit einer Lenksäule und einem Lenkrad eines Nutzfahrzeugs verbunden. Wenn ein Fahrer das Lenkrad dreht, dreht sich die Eingangswelle 102 und überträgt dadurch die Lenckraft des Fahrers in das Lenkunterstützungssystem 100. Der Torsionsstab 118 verbindet gemäß einigen Ausführungsformen die Eingangswelle 102 mit der Ausgangswelle 104. Der Torsionsstab 118 verdreht sich proportional zu einem Betrag der durch den Fahrer auf das Lenkrad ausgeübten Kraft. Der Betrag der Verdrehung wird durch den Sensor oder die Sensorbaugruppe 116 gemessen, um zu bestimmen oder zu berechnen, wie viel Unterstützung durch den Fahrer benötigt wird. Ein zugeordneter Computer, eine ECU, des Lenkunterstützungssystems 100 empfängt sowohl die durch den Sensor oder die Sensorbaugruppe 116 erhaltenen Messungen als auch Daten von anderen Sensoren des Lenkunterstützungssystems 100 und stellt sie einem Algorithmus zum Bestimmen von Betätigungsanweisungen für einen zugeordneten Elektromotor bereit, um eine Lenkunterstützung oder eine Spurhalteunterstützung bereitzustellen. Gemäß den Ausführungsformen ist die Welle 104 letztlich mit den Rädern eines Nutzfahrzeugs verbunden. Die Ausgangswelle 104 empfängt eine kombinierte Kraft aus der Eingabe des Fahrers und der durch das Lenkunterstützungssystem 100 erzeugten Unterstützungskraft und leitet dann diese Bewegung für das Drehen zu den Rädern, um eine Lenkunterstützung oder Spurhalteunterstützung bereitzustellen.

Gemäß den Ausführungsformen koppelt der Ausgangswellenadapter 106 die Ausgangswelle 104 mit dem Schneckenrad 112 oder er verbindet sie anderweitig miteinander. Der Ausgangswellenadapter 106 überträgt das durch das Lenkunterstützungssystem 100 erzeugte Unterstützungsdrehmoment gleichmäßig vom Schneckenrad 112 auf die Ausgangswelle 104. Gemäß den Ausführungsformen greift das Schneckenrad 112 in ein Schneckengetriebe ein oder arbeitet anderweitig mit diesem zusammen, um die Unterstützungskraft bereitzustellen, die den Fahrer unterstützt. Wenn durch einen Fahrer eine Lenkunterstützung benötigt wird, dreht ein Elektromotor das Schneckengetriebe, das in das Schneckenrad eingreift, wobei er ein zusätzliches Drehmoment erzeugt, um das Drehen der Räder des Nutzfahrzeugs zu unterstützen. Gemäß den Ausführungsformen detektiert der Sensor oder die Sensorbaugruppe 116 verschiedene Messwerte, wie z. B. die Position und die Kraft auf die Eingangswelle 102, den Winkel des verbundenen Lenkrads und eine Verdrehung des Torsionsstabs 118. Diese Messwerte können durch die ECU und die implementierten Algorithmen der ECU verwendet werden, um zu bestimmen, wie viel Lenkunterstützung erforderlich ist, und um die Unterstützungskraft nach Bedarf einzustellen. Gemäß den Ausführungsformen trägt das Lager 110 die Bewegung der Eingangswelle 102 und der Ausgangswelle 104, wobei Reibung und Verschleiß verringert werden, während eine gleichmäßige Drehung der Eingangswelle 102 und der Ausgangswelle 104 ermöglicht wird, da sie während des Betriebs des Nutzfahrzeugs zusammenarbeiten. Gemäß den Ausführungsformen sichert die Tragplatte 108 das Schneckenrad 112 und das Lager 110, wobei sie eine strukturelle Unterstützung für andere Komponenten, wie z. B. den Ausgangswellenadapter 106, die Ausgangswelle 104 und die Eingangswelle 102, bereitstellt. Der Ausgangswellenadapter 106 kann indirekt mit dem Lenkrad eines Nutzfahrzeugs verbunden sein, was bedeutet, dass das Drehmoment von dem Elektromotor indirekt das Gefühl verstärkt, das der Fahrer am Lenkrad spürt. Während ein Fahrer das Nutzfahrzeug bedient und das Lenkunterstützungssystem 100 Unterstützung bereitstellt, empfangen die Ausgangswelle 104 und der Ausgangswellenadapter 106 Kräfte, die versuchen, sie in einer axialen Richtung zu trennen. Sowohl die Presspassung der Welle 104 und des Ausgangswellenadapters 106 als auch die Wellenhalteschraube 114 sichern diese Komponenten aneinander und verhindern eine Trennung in einer axialen Richtung.

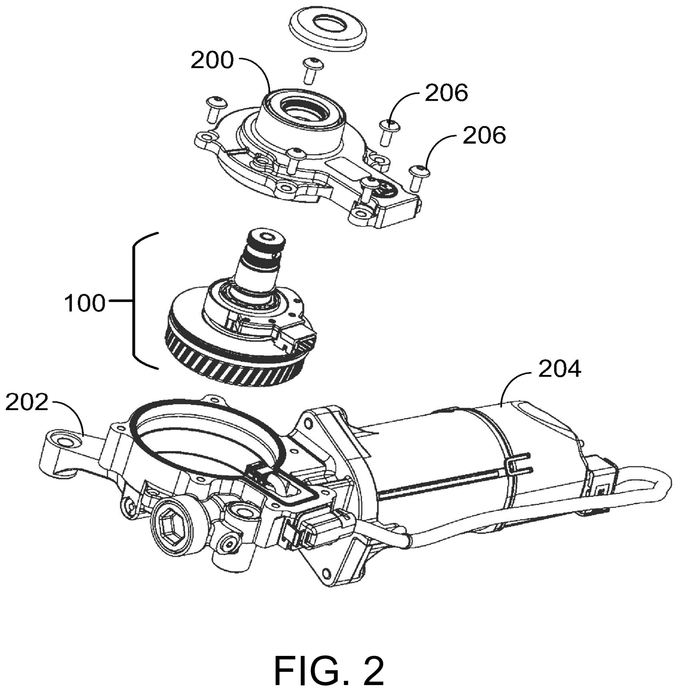

Fig. 2 veranschaulicht eine perspektivische Ansicht des Lenkunterstützungssystems 100 mit einer Abdeckungshalterung 200 und einem Hauptgehäuse 202 eines ReAX-Moduls mit einem befestigten elektronischen Netzteil 204 gemäß einem oder mehreren Beispielen der vorliegenden Offenbarung. Gemäß den Ausführungsformen ist das Lenkunterstützungssystem 100 in dem Hauptgehäuse 202 angebracht, wobei die Abdeckungshalterung 200 das Lenkunterstützungssystem 100 über die Bolzen 206 am Hauptgehäuse 202 befestigt. Gemäß den Ausführungsformen ist das Hauptgehäuse 202 konfiguriert, die Tragplatte des Lenkunterstützungssystems 100 aufzunehmen, wobei diese Komponenten gemeinsam eine Bewegung der Eingangswelle, der Ausgangswelle und des Ausgangswellenadapters in einer radialen Richtung verhindern. Gemäß den Ausführungsformen liefert das elektronische Netzteil 204 Leistung an den Elektromotor des Lenkunterstützungssystems eines Nutzfahrzeugs. Der Elektromotor erzeugt das erforderliche Drehmoment, um die Lenkung zu unterstützen und dadurch die physische Kraft zu verringern, die durch den Fahrer benötigt wird, um zu lenken, oder um die Spurhalteunterstützung zu unterstützen.

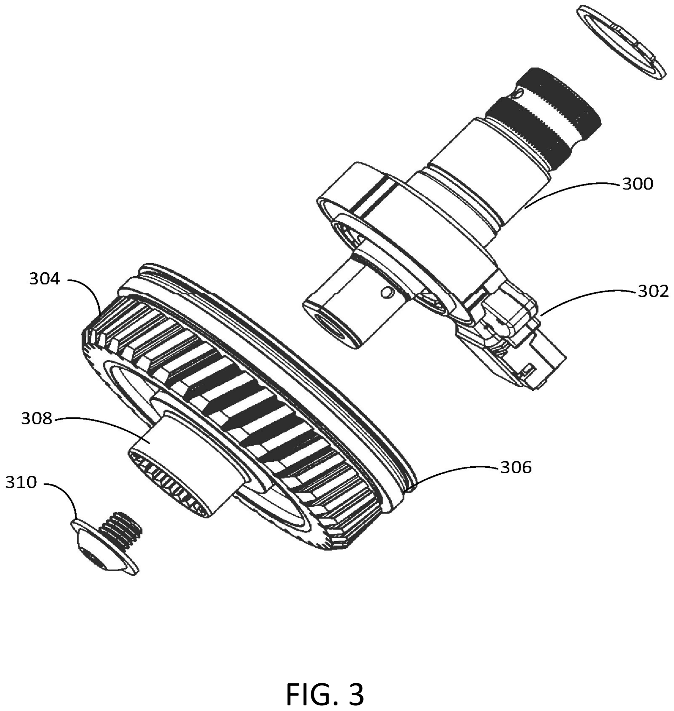

Fig. 3 veranschaulicht eine perspektivische Ansicht eines Lenkunterstützungssystems, das eine Eingangs-Ausgangs-Baugruppe 300, eine Sensor-Unterbaugruppe 302, ein Schneckenrad 304, eine Tragplatte 306, einen Ausgangswellenadapter 308 und eine Wellenhalteschraube 310 enthält, gemäß einem oder mehreren Beispielen der vorliegenden Offenbarung. Wie in Fig. 3 dargestellt ist, sind das Schneckenrad 304 und der Ausgangswellenadapter 308 an der Tragplatte 306 angebracht. Die Eingangs-Ausgangs-Baugruppe 300 kann die Eingangswelle, die Ausgangswelle und einen Torsionsstab enthalten, der koaxial innerhalb der Eingangswelle, der Ausgangswelle und des Ausgangswellenadapters 308 angeordnet ist, wenn sie zusammengebaut ist, wie in Fig. 1 dargestellt ist. Wie hier beschrieben worden ist, umgibt die Sensor-Unterbaugruppe (Sensoranordnung) 302 die Eingangs-Ausgangs-Baugruppe 300 (z. B. die Eingangswelle, die Ausgangswelle und den Torsionsstab) in Umfangsrichtung. Gemäß den Ausführungsformen enthält die Wellenhalteschraube 310 Gewinde (z. B. Außengewinde), die, wenn durch eine Anziehkraft auf sie gewirkt wird, in die Gewinde (z. B. die Innengewinde) der Ausgangswelle der Eingangs-Ausgangs-Wellenbaugruppe 300 eingreifen und dadurch den Ausgangswellenadapter 308 und die Eingangs-Ausgangs-Baugruppe 300 befestigen. Der Ausgangswellenadapter 308 und die Eingangs-Ausgangs-Baugruppe 300 sind außerdem ineinander eingepresst, wobei die Wellenhalteschraube 310 eine zusätzliche Sicherungskraft auf diese Komponenten bereitstellt, die eine Trennung in einer axialen Richtung verhindert.

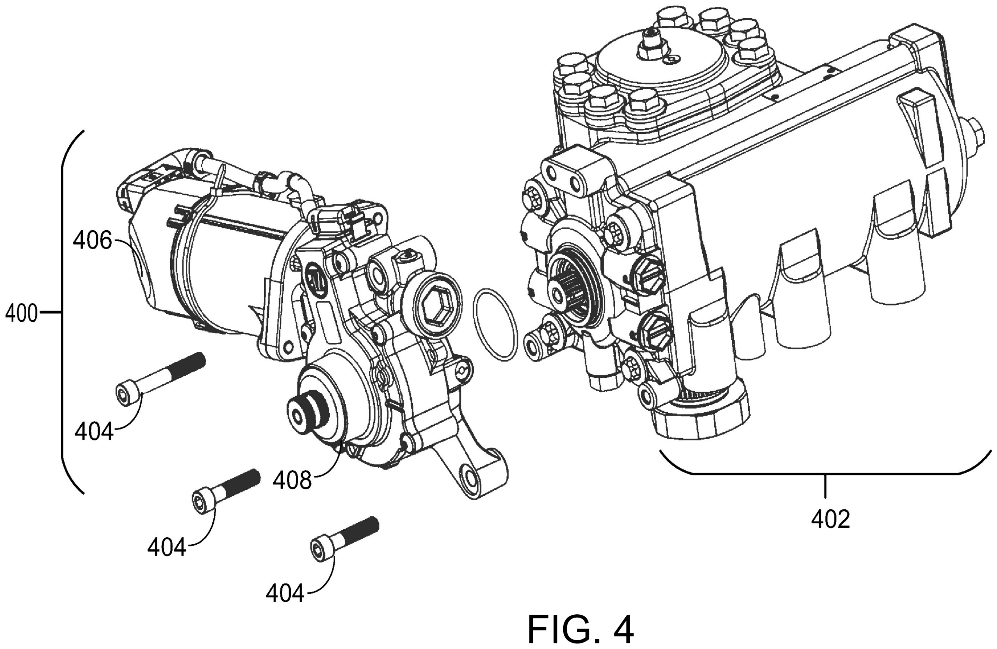

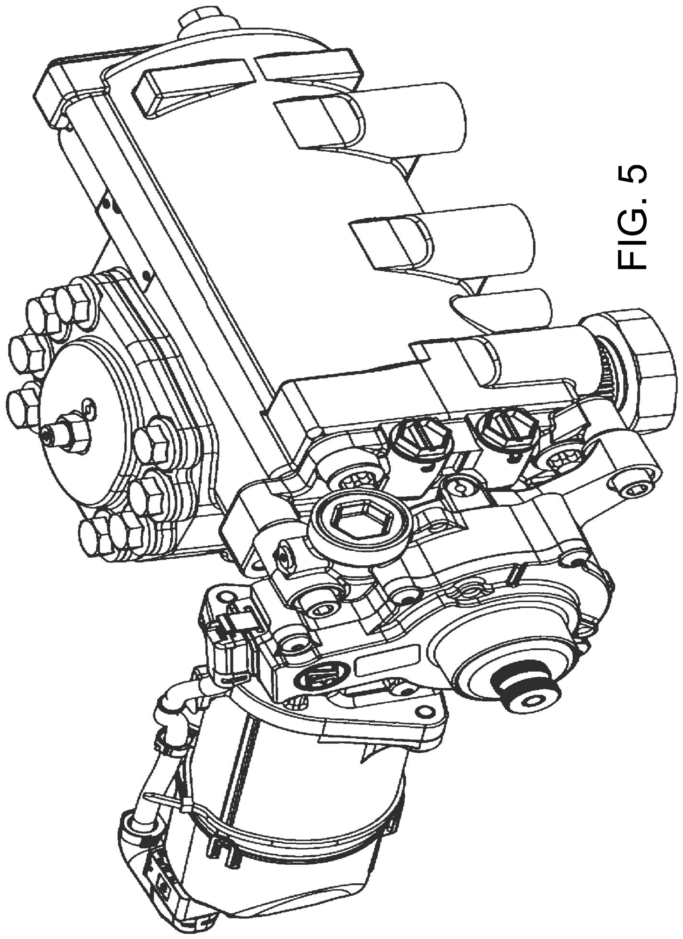

Fig. 4 veranschaulicht eine perspektivische Ansicht eines ReAX-Moduls 400, das mit dem Lenkunterstützungssystem zusammengebaut ist, und einer zusammengebauten hydraulischen Lenkgetriebebaugruppe 402 gemäß einem oder mehreren Beispielen der vorliegenden Offenbarung. Gemäß den Ausführungsformen ist die Baugruppe des ReAX-Moduls 400 über die Befestigungsbolzen 404 an der hydraulischen Lenkgetriebebaugruppe 402 angebracht. Das ReAX-Modul 400 enthält das elektronische Netzteil 406 und die Eingangs-Ausgangs-Baugruppe 408, die die oben bezüglich der Fig. 1 und 2 beschriebenen Komponenten enthält. Das ReAX-Modul 400 und die hydraulische Lenkgetriebebaugruppe 402 bilden, sobald sie zusammengebaut sind, zusammen das ReAX-Getriebesystem des Lenkunterstützungssystems. Eine perspektivische Ansicht der Baugruppe des ReAX-Getriebesystems ist in Fig. 5 dargestellt. Gemäß den Ausführungsformen verwendet die hydraulische Lenkgetriebebaugruppe 402 den Druck des Hydraulikfluids, um das ReAX-Modul 400 beim Bereitstellen einer Lenkunterstützung und einer Spurhalteunterstützung für das Nutzfahrzeug zu unterstützen.

Während der Gegenstand der vorliegenden Offenbarung in den Zeichnungen ausführlich veranschaulicht und in der vorstehenden Beschreibung ausführlich beschrieben worden ist, sollen eine derartige Veranschaulichung und Beschreibung als veranschaulichend oder beispielhaft und nicht als einschränkend betrachten werden. Jede hier gemachte Aussage, die die vorliegende Offenbarung charakterisiert, ist außerdem als veranschaulichend oder beispielhaft und nicht als einschränkend zu betrachten, da die vorliegende Offenbarung durch die Ansprüche definiert ist. Es wird erkannt, dass Änderungen und Modifikationen durch die Durchschnittsfachleute auf dem Gebiet innerhalb des Schutzumfangs der folgenden Ansprüche vorgenommen werden können, die jede Kombination von Merkmalen aus verschiedenen oben beschriebenen Ausführungsformen enthalten können.

Die in den Ansprüchen verwendeten Begriffe sollten so ausgelegt werden, dass sie die breiteste sinnvolle Interpretation aufweisen, die mit der vorstehenden Beschreibung konsistent ist. Die Verwendung des Artikels "einer" oder "der/die/das" beim Vorstellen eines Elements sollte z. B. nicht so ausgelegt werden, dass sie mehrere Elemente ausschließt. Ebenfalls sollte die Angabe "oder" als inklusiv interpretiert werden, so dass die Angabe "A oder B" nicht "A und B" ausschließt, wenn es nicht aus dem Kontext oder der vorstehenden Beschreibung klar ist, dass nur eines von A und B gemeint ist. Ferner sollte die Angabe "wenigstens eines von A, B und C" als eines oder mehrere aus einer Gruppe von Elementen, die aus A, B und C besteht, interpretiert werden, wobei sie nicht so interpretiert werden sollte, dass wenigstens eines von jedem der aufgeführten Elemente A, B und C erforderlich ist, ungeachtet dessen, ob A, B und C als Kategorien oder anderweitig in Beziehung stehen. Überdies sollte die Angabe "A, B und/oder C" oder "wenigstens eines von A, B oder C" so interpretiert werden, dass sie jede einzelne Entität aus den aufgeführten Elementen, z. B. A, jede Teilmenge aus den aufgeführten Elementen, z. B. A und B, oder die gesamte Liste der Elemente A, B und C enthält.

## Patentansprüche

1. Lenkunterstützungssystem für ein Nutzfahrzeug, wobei das Lenkunterstützungssystem Folgendes umfasst:
eine Eingangswelle, die eine Eingangsachse und einen ersten hohlen Abschnitt definiert, wobei die Eingangswelle konfiguriert ist, in eine Lenksäule des Nutzfahrzeugs einzugreifen;
eine Ausgangswelle, die eine Ausgangsachse und einen zweiten hohlen Abschnitt definiert, wobei die Ausgangswelle innerhalb des ersten hohlen Abschnitts koaxial zur Eingangswelle angeordnet ist und der zweite hohle Abschnitt Innengewinde definiert;
einen Ausgangswellenadapter, der einen dritten hohlen Abschnitt definiert, der sich axial durch den Ausgangswellenadapter erstreckt, wobei der dritte hohle Abschnitt einen Bereich mit kleinerem Durchmesser an einem ersten Ende und einen Bereich mit größerem Durchmesser neben dem Bereich mit kleinerem Durchmesser aufweist, wobei eine Schulter an einem Übergang zwischen dem Bereich mit kleinerem Durchmesser und dem Bereich mit größerem Durchmesser definiert ist,
wobei der Ausgangswellenadapter an dem ersten Ende der Ausgangswelle angeordnet ist, so dass der Bereich mit kleinerem Durchmesser die Ausgangswelle in Umfangsrichtung umgibt;
eine Tragplatte, die ein Lager enthält, das konfiguriert ist, den Ausgangswellenadapter aufzunehmen und die Drehung des Ausgangswellenadapters zu führen;
ein Schneckenrad, das den Ausgangswellenadapter in Umfangsrichtung umgibt, wobei das Schneckenrad einen äußeren Umfang aufweist, der konfiguriert ist, in eine Schneckenwelle zur Lenkunterstützung einzugreifen; und
eine Wellenhalteschraube mit einem Kopfabschnitt, der einen Flansch definiert, und einem Körperabschnitt, der Außengewinde definiert, wobei die Wellenhalteschraube in dem dritten hohlen Abschnitt angeordnet ist, so dass der Flansch in die Schulter eingreift und sich der Körperabschnitt in den zweiten hohlen Abschnitt erstreckt, so dass die Außengewinde in die Innengewinde der Ausgangswelle eingreifen, um eine axiale Trennung zwischen der Ausgangswelle und dem Ausgangswellenadapter zu verhindern.

2. Lenkunterstützungssystem nach Anspruch 1, das ferner eine Sensorbaugruppe umfasst, die die Eingangswelle und die Ausgangswelle in Umfangsrichtung umgibt, wobei die Sensorbaugruppe konfiguriert ist, einen Winkelunterschied zwischen der Eingangswelle und der Ausgangswelle zu messen.

3. Lenkunterstützungssystem nach Anspruch 1, wobei der Ausgangswellenadapter ferner Keilnuten zum Eingreifen in eine Welle einer hydraulischen Lenkgetriebebaugruppe des Nutzfahrzeugs umfasst.

4. Lenkunterstützungssystem nach Anspruch 1, das ferner einen Torsionsstab umfasst, der koaxial innerhalb des ersten und des zweiten hohlen Abschnitts angeordnet ist.

5. Lenkunterstützungssystem nach Anspruch 1, wobei die Wellenhalteschraube ferner eine Sechskantschraube mit Innengewinde zum Drehen der Wellenhalteschraube enthält, so dass die Außengewinde in die Innengewinde eingreifen.

6. Lenkunterstützungssystem nach Anspruch 1, wobei der Flansch einen Durchmesser aufweist, der größer als der Bereich mit kleinerem Durchmesser ist.

7. Lenkunterstützungssystem nach Anspruch 1, das ferner ein Gehäuse umfasst, das konfiguriert ist, die Tragplatte aufzunehmen, wobei das Gehäuse und die Tragplatte konfiguriert sind, eine Bewegung der Eingangswelle, der Ausgangswelle und des Ausgangswellenadapters in einer radialen Richtung zu verhindern.

8. Lenkunterstützungssystem nach Anspruch 1, wobei die Ausgangswelle in den Ausgangswellenadapter eingepresst ist.

9. Lenkunterstützungssystem nach Anspruch 1, wobei der Ausgangswellenadapter konfiguriert ist, in eine Eingangswelle eines hydraulischen Lenkgetriebes des Nutzfahrzeugs einzugreifen.
